# EUROPEAN PATENT APPLICATION

(11) **EP 1 754 642 A1**
(43) Date of publication of application: **21.02.2007**
(21) Application number: 06116206.1
(22) Date of filing: 28.06.2006
(51) Int. Cl.: B60T 17/08

(54) **Pressure-energized seal for a brake actuator.**

(30) Priority: 17.08.2005 US 205038
(71) Applicant: Bendix Commercial Vehicle Systems, LLC, Elyria, Ohio 44035 (US)
(72) Inventor: SCHECKELHOFF, Kenneth E., Elyria, OH 44035 (US); PLANTAN, Ronald S., Westlake, OH 44145 (US); DARNER, Brett S., Wellington, OH 44035 (US)
(74) Representative: Dantz, Jan Henning

(57) **Abstract**

A pressure-energized seal for a spring-type brake actuator for a vehicle brake, in which the actuator's power spring is located between the service brake actuator and parking brake release actuator. The power spring is captured between the actuator's intermediate flange and a spring retainer. In order to prevent pressure leakage past the spring retainer into a power spring cavity, a pressure-energized seal is located between the plate and the housing. The seal member, which is carried by the spring plate or the housing, has a pressure-receiving section with resilient outer portions, which are deflected by pressure in the service chamber into firm contact with the spring plate and the actuator housing interior wall, increasing the sealing force between the seal and both the plate and the housing. The pressure-energized seal provides improved seal performance with a seal which is easy to inspect and/or replace, highly reliable, and relatively inexpensive.

## Description

### BACKGROUND AND SUMMARY OF THE INVENTION

The present invention relates to pressure-energized seal, and in particular pressure-energized seal for use in a spring-type brake actuator for a braking system for a vehicle.

So-called "spring brake" actuators are commonly used to provide service, parking and emergency brake operation on vehicles such as commercial trucks, tractors and trailers equipped with lever-operated drum or disc brakes. Spring-type brake actuators are typically pneumatically operated, and are supplied with operating air from a compressed air source on the vehicle. These actuators also typically are arranged in a "fail-safe" manner, i.e., where the actuator defaults to a brake application state upon loss of operating air pressure.

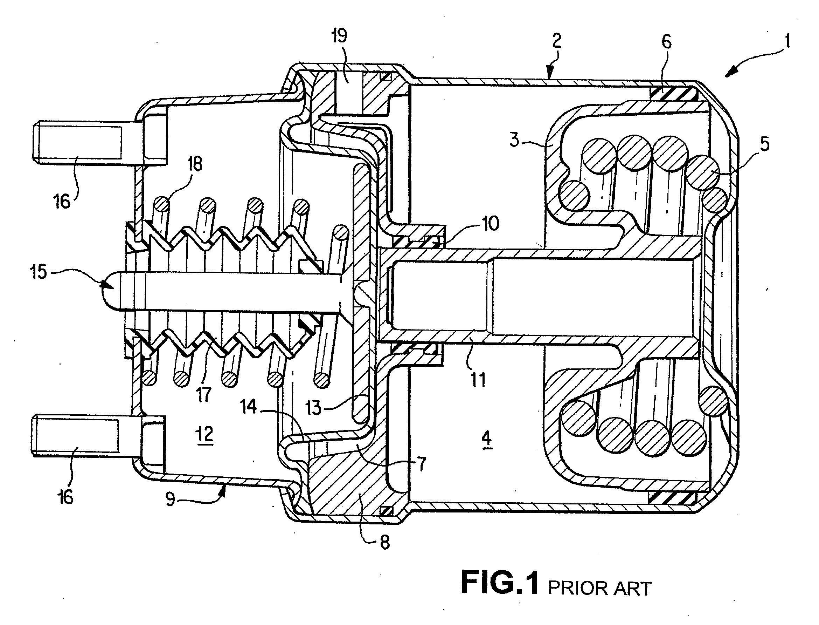

An example prior art spring brake actuator is shown in cross-section view in Fig. 1. Actuator housing 1 includes a rear cylinder 2 in which a rear piston 3 is displaceably arranged. The inner wall of the rear cylinder and a chamber-side of the rear piston define a rear ventilation chamber 4. The other side of the rear piston bears on a brake actuator spring 5. This spring is also known in the art as a "power spring" or a "parking brake spring," and these terms may be used interchangeably. For consistency herein, the terms "brake actuator spring" or "actuator spring" will be used. The rear ventilation chamber is isolated from the spring side of piston 3 by an annular seal 6. An intermediate flange 8 (also known as a "wall") separates rear cylinder 2 from a front cylinder 9. The intermediate flange 8 traversed by a seal 10 through which passes a sliding rod 11, formed as an extension of rear piston 3. The sliding rod 11 can be displaced in the intermediate flange 8 by the rear piston. A front ventilation chamber 7 within front cylinder 9 is delimited by the cylinder inner wall and a front piston 13 and annular diaphragm 14. The rear piston 3 and the front piston 13 are in non-coupled contact with one another by means of the sliding rod 11, such that the front piston 13 can be displaced in a brake application direction by the rear piston 3. An actuating rod 15 for actuating a brake lever of a vehicle brake is provided on the front side of the front piston 13.

When no pneumatic pressure is present in the Fig. 1 actuator unit, the brake actuation spring 5 applies a high spring force to rear piston 3, which in turn applies this force via sliding rod 11 to front piston 13 to cause the actuator rod 15 to apply the vehicle brake. In this state, the vehicle brake functions as a parking brake, preventing vehicle movement. When release of the parking brake is desired, the rear ventilation chamber 4 is filled with compressed air via port 19. As the force generated by the increasing air pressure on the front side of rear piston 3 exceeds the force generated by brake application spring 5, the rear piston 3 and sliding rod 11 move toward the rear of the rear cylinder 2, compressing spring 5. At the same time, as sliding rod 11 moves towards the rear, the force previously applied to front piston 13 is relieved, and the return spring 18 biases the front piston 13 toward the rear of front cylinder 9, thereby withdrawing actuating rod 15 away from and releasing the vehicle brake. The vehicle therefore moves from a state in which it is braked by the brake actuator spring 5, to a non-braked state in which the vehicle may be moved.

The vehicle brake is applied as a service brake during normal operation by admitting compressed air into the front ventilation chamber 7 (via a port not shown in Fig. 1). Because air pressure in rear ventilation chamber 4 continues to hold sliding rod 11 at the rear of the rear cylinder 2, the front piston 13 and actuating rod 15 are free to move forward and backward within the front cylinder as necessary to respond to the operator's brake actuation demands. In the event of failure of the compressed-air supply during operation of the vehicle, the pressure in the rear ventilation chamber 4 decreases. As a result, the brake actuation spring 5 automatically pushes the rear piston 3 back to the starting (parking) position. Sliding rod 11 thus presses on the front piston 13, which in turn pushes the actuating rod 15 in the brake application direction to actuate the vehicle brake. Thus, fail-safe emergency operation of the vehicle brake is assured.

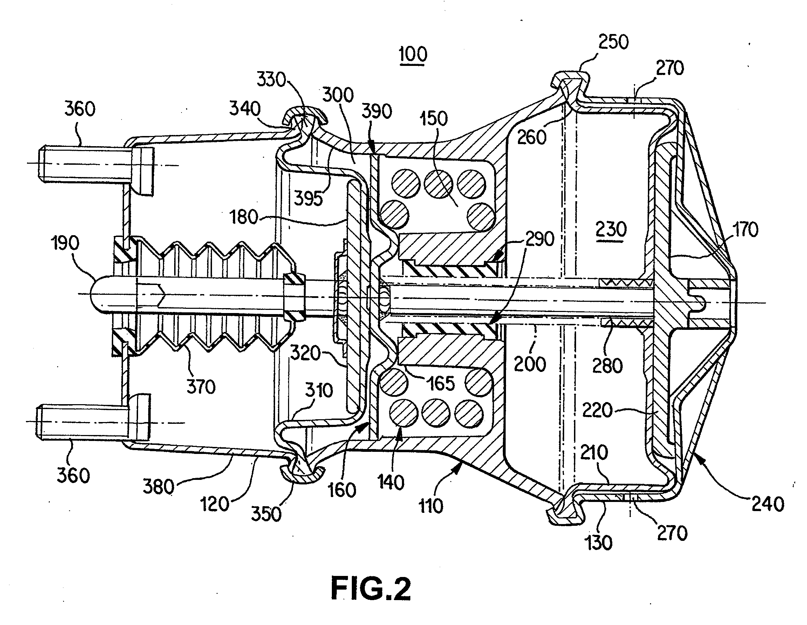

As discussed in pending U.S. Patent Application Ser. No. 11/012,313, filed December 16, 2004, prior art spring-type brake actuators have a number of problems. Application Ser. No. 11/012,313 discloses an improved actuator which is safer, lighter, simpler, more reliable, less costly and/or safer to assemble and service than prior art actuators. As shown in Fig. 2, this new approach to spring-brake actuators is arranged with its brake actuator spring 140 (also known as a "power spring") relocated to the front portion 120 of the actuator housing, occupying a position between the front service brake actuator 180 and the rear parking brake release actuator 170. When the spring brake actuator is inactive (i.e., no pressure exists in either the front or rear chambers), the brake actuator spring 140 applies the vehicle brake by pressing on the service brake actuator 180 via an intermediate spring retainer in the form of spring plate 160, and the service brake actuator 180 in turn presses the brake actuator rod 190 forward in a brake application direction.

The parking brake release actuator, instead of pressing directly on the service brake actuator (as in the prior art), is affixed via its attached shaft 200 to the intermediate spring plate 160. Thus, when air pressure is applied to the rear chamber, rather than compressing the brake actuator spring into the rear end of the actuator housing, as in the prior art, the parking brake release actuator draws the intermediate spring plate toward the intermediate body portion 110 of the actuator, compressing the brake actuator spring against the front side (or "floor") of the intermediate flange to remove the spring's force from the actuator rod. This arrangement preserves the "fail-safe" nature of the spring-type brake actuator (i.e., loss of pressure in the rear chamber still results in the brake actuator spring reapplying the brake), while also positively capturing the spring between the spring plate and the intermediate flange.

One of the features of the new spring brake actuator is the location of the brake actuator spring 140 in the front chamber 300. During operation it is desirable to control leakage of pressurized air between the front chamber 300, the recess 150 into the rear chamber 230 through seal member 290 and seal member 390. Fig. 2 illustrates one approach to reduce leakage across spring plate 160, the inclusion of a seal member 390 about the periphery of the spring plate. This particular seal design, however, requires costly machining of the interior wall of the intermediate housing 110 in order to provide the seal with a smooth seating surface throughout its entire range of travel. Such machining is particularly wasteful where a seal is needed only when the power spring 140 is fully compressed (for example, when pressure equalization across the spring plate 160 to ensure actuation of the brake actuator rod 190 by parking brake release actuator 170 is not inhibited). Further, this seal design is static, i.e., there is nothing which increases the sealing effectiveness as pressure behind the seal increases in service chamber 300, so that leaks across the seal from rising pressure are not counteracted. Such a seal is also susceptible to being peeled away from the periphery of the spring plate 160 by friction as the seal is dragged along the inner wall of the intermediate housing, particularly if the spring plate is axially misaligned such that load applied to the seal 390 is concentrated one side of the seal. The potential leakage of service air across the spring plate peripheral seal can result in undesirable changes in power spring chamber pressure.

In view of the foregoing, it is an objective of the present invention to provide an improved intermediate spring plate sealing arrangement in which both static and dynamic sealing is improved over prior seals.

It is an additional objective of the present invention to provide a self-energizing sealing arrangement which increases static and dynamic sealing forces as pressure in the front service chamber increases.

It is a further objective of the present invention to provide a sealing arrangement which does not require extensive machining of the brake actuator intermediate housing to provide an adequate sealing surface.

It is also an objective of the present invention to provide a sealing arrangement which is highly resistant to undesired displacement from the intermediate spring plate due to being peeled away from its seal support surface on one of the spring plate or a seal groove on the intermediate housing.

Another objective of the present invention to provide a pressure relieving feature from the power spring chamber 150 into the service brake chamber 300 in the event a higher pressure exists in the power spring chamber, by providing a seal about the periphery of the spring plate which can momentarily vent (i.e., "burp") to equalize the pressure between the power spring and service brake chambers. In this manner, the seal effectively functions much like a one-way check valve.

These objects are solved by the subject matter of independent claims 1, 10, 13, 14, 15, 16, 17.

Preferred embodiments are the subject matter of the subclaims.

In addressing these and other objectives, the present invention includes a spring plate peripheral seal which, in addition to providing a seal against its seat from static compression by the spring plate, advantageously utilizes the pressure built up in a mid-spring brake actuator's service chamber to energize the seal. Embodiments of the present invention also positively locate the seal about at least one of the outer circumference of the spring plate or about a supporting feature of the inner wall of the actuator housing.

Other objects, advantages and novel features of the present invention will become apparent from the following detailed description of the invention when considered in conjunction with the accompanying drawings.

### BRIEF DESCRIPTION OF THE DRAWINGS

Figure 1 is a cross-section view of an example prior art spring-type pneumatic brake actuator.

Figure 2 is a cross-section view of an example embodiment of a mid-spring, spring-type brake actuator.

Figure 3A is a cross-section view of an example embodiment of a mid-spring, spring-type brake actuator containing an embodiment of a pressure-energized seal in accordance with an embodiment of the present invention.

Figure 3B is a detailed cross-section view of the embodiment of the pressure-energized seal in Fig. 3A.

Figure 4A is a cross-section view of a center portion of a mid-spring, spring-type brake actuator containing another embodiment of a pressure-energized seal in accordance with the present invention.

Figure 4B is a detailed cross-section view of the embodiment of the pressure-energized seal in Fig. 4A.

### DETAILED DESCRIPTION OF THE DRAWINGS

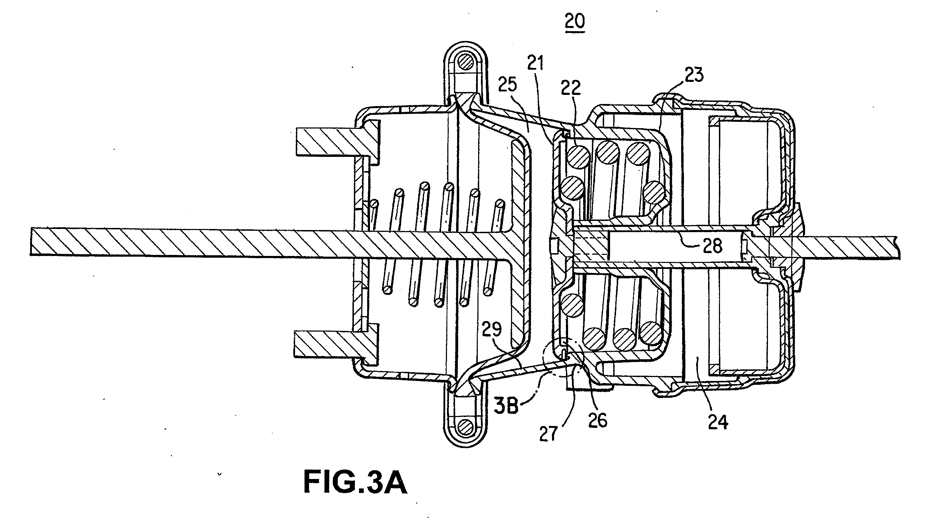

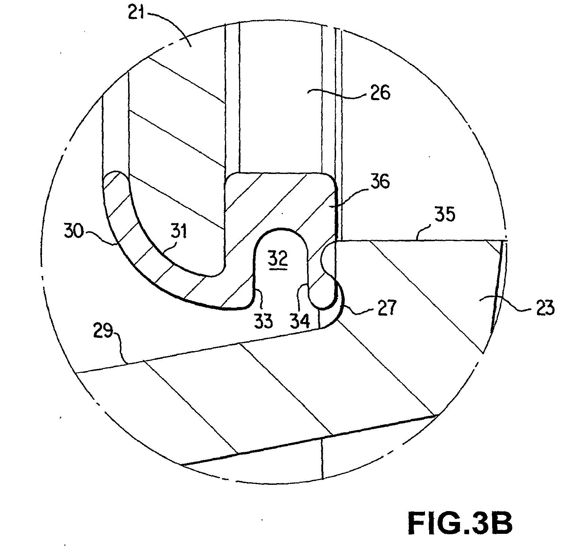

Figure 3A is a cross-section view of a spring-type brake actuator 20 in accordance with a first embodiment of an apparatus illustrating aspects of the present invention. The spring brake actuator 20 includes a spring plate 21 which retains power spring 22 against intermediate housing 23. During normal operation, pressure applied in rear chamber 24 causes spring plate 21 to compress power spring 22 into the power spring cavity of intermediate housing 23. The respective volumes of the service chamber 25 and the power spring cavity of intermediate housing 23 are effectively separated by a seal 26 that is provided about the periphery of the spring plate 21, and a corresponding sealing surface 27 is provided at a front edge of the power spring cavity of intermediate housing 23. In this embodiment, sealing of the power spring cavity from the service chamber is only achieved when the parking brake withdrawal rod 28 is fully withdrawn. Positive venting of the power spring cavity into the service chamber 25 at all other times is achieved by tapering the inner wall 29 of the service chamber 25 away from the center line of the actuator, and by a seal 26 configuration which allows the seal to momentarily lift off its seat (*i.e.,* "burp"), for example, by local deformation, to vent pressure from the power spring cavity.

Figure 3B is a detailed cross-section view of the pressure-energized seal arrangements identified in Detail A of the Fig. 3A embodiment. In this embodiment, the seal 26 is arranged such that when the parking brake withdrawal rod 28 is fully withdrawn, the seal 26 seals the gap between the outer periphery of spring plate 21 and the sealing surface 27, in this embodiment a ledge-shaped surface formed by casting, milling, etc. into the inner wall of intermediate housing 23.

In order to ensure positive retention of the seal 26 on the spring plate 21, the seal 26 is provided with a concave annular lip 30 which is shaped to reach around a corresponding edge surface 31 of the spring plate. The annular lip 30 resists seal removal forces (such as axial forces generated if the seal adheres to the sealing surface 27).

In addition, the seal is provided with pressure energizing section 32, which receives pressure applied in service chamber 25 and presses the spring-plate side 33 and seal surface side 34 of the seal apart, to increase the sealing of the seal 26 against passage of pressure from the service chamber 25 into the power spring cavity. These relatively thin portions of seal 26 are located radially outboard of the inner wall 35 of the power spring chamber, to ensure that any pressure present in the cavity does not counter the pressure applied in the service chamber 25 to energize the seal. The portion 36 of the seal 26 exposed to any pressure in the power spring cavity is preferably formed in thick enough section that the pressure in the cavity is not permitted to substantially deform the seal 26.

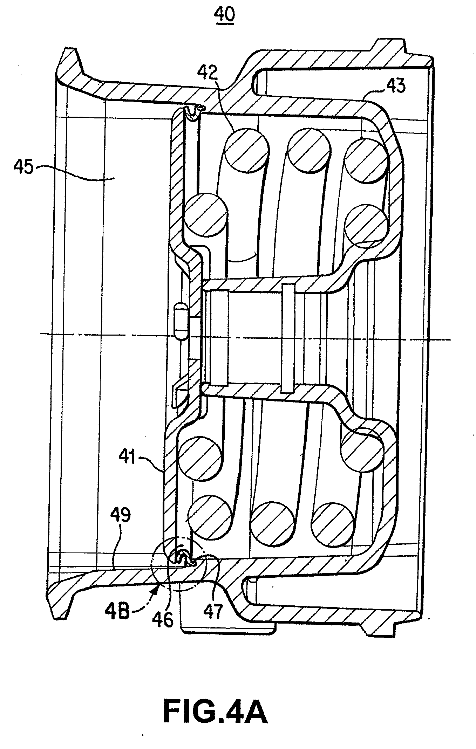

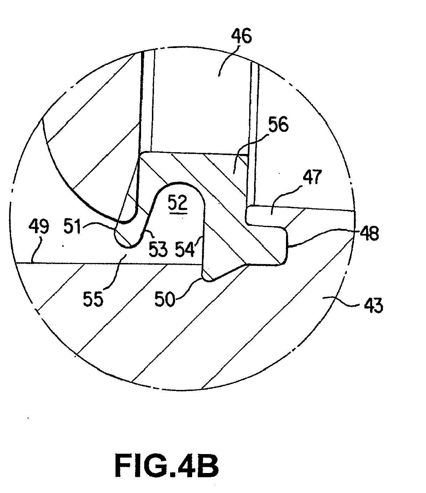

An alternative embodiment of a pressure-energized seal in accordance with the present invention is illustrated in Figs. 4A and 4B. Fig. 4A shows a cross-section view an intermediate housing 40 of a mid-spring spring-type brake actuator, with various service brake- and parking brake-related elements not illustrated for clarity of illustration. As in the previous embodiment, a spring plate 41 captures the power spring 42 within a power spring cavity of the intermediate housing 43, when the parking brake withdrawal rod (not illustrated) in parking brake chamber draws the spring plate toward the power spring cavity. As the spring plate 41 reaches the cavity, the cavity is isolated from service chamber 45 by seal 46, located between spring plate 41 and seal surface 47. As in the previous embodiment, inner wall 49 tapers radially away from the spring plate to ensure free communication between the power spring cavity and the service chamber 45 when the spring plate is not in the fully retracted position.

Fig. 4B is a detailed cross-section view of the pressure-energized seal arrangements identified in Detail B of the Fig. 4A embodiment. Unlike the seal embodiment in Figs. 3A and 3B, the seal 46 is not carried by the spring plate, but is retained on the intermediate housing 43 at the seal surface 47. In this embodiment, a ledge-shaped surface formed by casting, milling, etc. into the inner wall of intermediate housing 43 defines an axial seal support groove 48. This seal support groove 48 cooperates with an adjacent radial seal support groove 50 formed in inner wall 49 to ensure retention of seal 46 on support surface 47, and to lock the seal in place against pressure applied to either side of the seal.

Because seal 46 is retained on support surface 47, the seal is not provided with the previous embodiment's concave annular lip 30 which wraps around the outer periphery of the spring plate. Nonetheless, in order to provide for pressure energizing of the seal, an annular lip 51 is provided. When the spring plate 41 is in contact with lip 51, a pressure energizing section 52 receives pressure applied in service chamber 45, such that the spring-plate side 53 and cavity side 54 of the seal are forced apart to increase the sealing forces between the seal 46, the spring plate 41 and the seal support surface 47. The lip 51 preferably has a sufficiently large diameter to provide a relatively large pressure energizing surface on the spring plate side 53 of the seal, but the diameter preferably is not so large as to close off the gap 55 between the inner wall 49 and the lip 51 as the seal is compressed toward support surface 47 by spring plate 41. This gap 55 ensures that the pressure medium in service chamber 45 can energize seal 46, even when the spring plate 41 is in its fully retracted position.

The seals of the foregoing example embodiments have several advantages. Due to the arrangement of the seals, they are capable of providing excellent sealing performance both when in a static state, i.e., when there is no pressure in the service chamber, so the seal is not pressure-energized, and when dynamically energized by pressure present in the chamber. In addition, these seals are very easy to inspect and/or replace in the field, they are very reliable due both to their positive retention on the spring plate or the intermediate housing and their limited loading (*i.e*. static, compressive loads, with essentially no tensile loads or shear forces generated by relative motion of adjacent parts); and they may be produced at relatively low cost due to the simple configuration of the seals and their supporting surfaces (*i.e.*, there are no complex or critical-tolerance parts).

One of ordinary skill in the art will recognize that the seal configuration may be varied in a number of ways from the foregoing example embodiments, as long as the seal configuration retains the ability to utilize pressure in one or both of the service chamber and the power spring cavity to energize the seal to enhance its sealing. Not only may the physical arrangement of the seal be altered, but the seal support surface need not be limited to a radial ledge-shaped feature, and may be located away from the actuator interior wall on a different part within the actuator, as long as the requisite barrier against pressure leakage from the service chamber into the power spring cavity is maintained by the alternative seal configuration. Similarly, for a spring plate-carried seal, the seal need not be retained to the plate by the above annular lip, but may be attached by any of a variety of well-known approaches, such as with fasteners, adhesives, seal appendages which are molded-in or held by corresponding recesses or holes in the spring plate, etc.

The foregoing disclosure has been set forth merely to illustrate the invention and is not intended to be limiting. Because other such modifications of the disclosed embodiments incorporating the spirit and substance of the invention may occur to persons skilled in the art, the invention should be construed to include everything within the scope of the appended claims and equivalents thereof.

## Claims

1. A seal for sealing a gap between a spring brake actuator housing interior wall and a spring retainer disposed between a service brake actuator and a parking brake release actuator of the spring brake actuator, comprising:
a seal member, wherein
the seal member is configured to be retained on one of the spring retainer or the interior wall of the spring brake actuator housing, and
the seal member includes at least one resilient portion at an outer peripheral surface of the seal which is deflectable in an axial direction when exposed to a pressure-applying medium.

2. The seal of claim 1, wherein
the seal member is configured to be retained by the spring retainer, and
the seal member includes an annular lip formed to extend about an outer periphery of the spring retainer.

3. The seal of claim 1, wherein
the seal member is configured to be retained on the inner wall of the spring brake actuator housing, and
the seal member includes at least one annular projection configured to cooperate with a corresponding recess in the spring brake actuator housing inner wall to retain the seal member.

4. The seal of claim 1, wherein the seal member is formed with an annular, radially-outward-facing groove, and the at least one resilient portion of the seal member includes at least one side of the groove.

5. The seal of claim 2, wherein the seal member is formed with an annular, radially-outward-facing groove, and the at least one resilient portion of the seal member includes at least one side of the groove.

6. The seal of claim 3, wherein the seal member is formed with an annular, radially-outward-facing groove, and the at least one resilient portion of the seal member includes at least one side of the groove.

7. The seal of claim 4, wherein the at least one resilient portion at an outer peripheral surface of the seal is axially deflectable in response to a pressure difference between a higher pressure on a radially-inner surface of the seal member and a lower pressure on the radially-outward-facing groove.

8. The seal of claim 5, wherein the at least one resilient portion at an outer peripheral surface of the seal is axially deflectable in response to a pressure difference between a higher pressure on a radially-inner surface of the seal member and a lower pressure on the radially-outward-facing groove.

9. The seal of claim 6, wherein the at least one resilient portion at an outer peripheral surface of the seal is axially deflectable in response to a pressure difference between a higher pressure on a radially-inner surface of the seal member and a lower pressure on the radially-outward-facing groove.

10. A spring brake actuator, comprising:
a brake actuator spring;
a parking brake release actuator;
a service brake actuator;
a spring brake actuator housing containing the service brake actuator, the parking brake release actuator, and the brake actuator spring between the brake actuators;
a spring retainer disposed between the brake actuator spring and the service brake actuator and coupled to the parking brake release actuator; and
a seal member, wherein
the seal member seals a gap between an interior wall of the spring brake actuator housing and the spring retainer,
the seal member is configured to be retained on one of the spring retainer or the interior wall of the spring brake actuator housing, and
the seal member includes at least one resilient portion at an outer peripheral surface of the seal which is deflectable in an axial direction when the resilient portion is exposed to a pressure-applying medium.

11. The spring brake actuator of claim 10, wherein
the seal member is carried by the spring retainer, and
the seal member includes an annular lip which extends about an outer periphery of the spring retainer.

12. The spring brake actuator of claim 10, wherein
the seal member is retained on the inner wall of the spring brake actuator housing, and
the seal member includes at least one annular projection which cooperates with a corresponding recess in the spring brake actuator housing inner wall to retain the seal member.

13. A vehicle brake assembly, comprising:
a brake, wherein the brake includes one of a disc brake and a drum brake; and
a spring brake actuator coupled to the brake to apply a brake actuation force, the spring brake actuator having a housing containing
a parking brake release actuator;
a service brake actuator;
a brake actuator spring disposed between the brake actuators;
a spring retainer disposed between the brake actuator spring and the service brake actuator and coupled to the parking brake release actuator; and
a seal member, wherein
the seal member seals a gap between an interior wall of the spring brake actuator housing and the spring retainer,
the seal member is configured to be retained on one of the spring retainer or the interior wall of the spring brake actuator housing, and
the seal member includes at least one resilient portion at an outer peripheral surface of the seal which is deflectable in an axial direction when the resilient portion is exposed to a pressure-applying medium.

14. A vehicle axle assembly, comprising:
a vehicle axle;
a brake coupled to the vehicle axle, wherein the brake includes one of a disc brake caliper and a drum brake; and
a spring brake actuator coupled to the brake to apply a brake actuation force, the spring brake actuator having a housing containing
a parking brake release actuator;
a service brake actuator;
a brake actuator spring disposed between the brake actuators;
a spring retainer disposed between the brake actuator spring and the service brake actuator and coupled to the parking brake release actuator; and
a seal member, wherein
the seal member seals a gap between an interior wall of the spring brake actuator housing and the spring retainer,
the seal member is configured to be retained on one of the spring retainer or the interior wall of the spring brake actuator housing, and
the seal member includes at least one resilient portion at an outer peripheral surface of the seal which is deflectable in an axial direction when the resilient portion is exposed to a pressure-applying medium.

15. A vehicle, the vehicle being self-propelled vehicle or a non-self-propelled trailer, comprising:
a vehicle body;
a vehicle axle coupled to the vehicle body;
a brake coupled to the vehicle axle, wherein the brake includes one of a disc brake and a drum brake; and
a spring brake actuator coupled to the brake to apply a brake actuation force, the spring brake actuator having a housing containing
a parking brake release actuator;
a service brake actuator;
a brake actuator spring disposed between the brake actuators;
a spring retainer disposed between the brake actuator spring and the service brake actuator and coupled to the parking brake release actuator; and
a seal member, wherein
the seal member seals a gap between an interior wall of the spring brake actuator housing and the spring retainer,
the seal member is configured to be retained on one of the spring retainer or the interior wall of the spring brake actuator housing, and
the seal member includes at least one resilient portion at an outer peripheral surface of the seal which is deflectable in an axial direction when the resilient portion is exposed to a pressure-applying medium.

16. A method of sealing a gap between a spring brake actuator housing interior wall and a spring retainer disposed between a service brake actuator and a parking brake release actuator of the spring brake actuator, comprising the acts of:
providing a seal member retained on one of the spring retainer or the interior wall of the spring brake actuator housing, the seal member including at least one resilient portion at an outer peripheral surface of the seal which is deflectable in an axial direction when the resilient portion is exposed to a pressure-applying medium; and
applying a pressure medium to the seal member to deflect the at least one resilient member toward at least one of the spring retainer and the inner wall of the spring brake actuator housing.

17. A spring brake actuator, comprising:
a parking brake release actuator;
a service brake actuator;
a brake actuator spring;
a spring brake actuator housing containing the brake actuator spring disposed between the brake actuators;
a spring retainer disposed between the brake actuator spring and the service brake actuator and coupled to the parking brake release actuator; and
means for sealing a first portion of the actuator housing on a brake actuator spring side of the spring retainer from second portion of the actuator housing on a service brake actuator side of the spring retainer.

18. The spring brake actuator of claim 17, wherein the sealing means seals a gap between an interior wall of the spring brake actuator housing and the spring retainer.

19. The spring brake actuator of claim 18, wherein the sealing means is retained on one of the spring retainer or the interior wall of the spring brake actuator housing.

20. The spring brake actuator of claim 19, wherein the sealing means includes at least one resilient portion at an outer peripheral surface of the seal which is deflectable in an axial direction when the resilient portion is exposed to a pressure-applying medium.
